# NOUVEAU FASCICULE DE BREVET EUROPEEN

(11) **EP 0 606 505 B2**
(45) Date de publication et mention de la décision concernant l'opposition: **03.07.2002**
(45) Mention de la délivrance du brevet: 28.04.1999
(21) Numéro de dépôt: 93100250.5
(22) Date de dépôt: 09.01.1993
(51) Int. Cl.: A23L 1/18, A23L 1/164

(54) **Procédé de préparation de céréales cuites**
Verfahren zur Herstellung von gekochten Getreideprodukten
Process for preparation of cooked cereals

(43) Date de publication de la demande: 20.07.1994
(73) Titulaire: SOCIETE DES PRODUITS NESTLE S.A., 1800 Vevey (CH)
(72) Inventeur: Huet, Jean Noel, CH-1000 Lausanne (CH)
(74) Mandataire: Wavre, Claude-Alain

(56) Documents cités:
- EP-A- 0 016 649
- BE-A- 783 756
- DE-A- 2 401 023
- GB-A- 847 677
- GB-A- 1 332 887
- GB-A- 2 210 244
- US-A- 2 954 296
- US-A- 3 554 763
- US-A- 3 708 308
- US-A- 4 769 253
- US-A- 4 844 935
- US-A- 5 132 133
- Whistler, R.L. et al. (1984), Starch: chemistry and technology, Academic Press, p. 583

## Description

La présente invention a trait à un procédé de préparation de céréales cuites par cuisson-extrusion.

II est connu de préparer des céréales cuites par traitement thermique à la vapeur, éventuellement sous pression, d'une matière amylacée telle qu'une mouture de céréales. On obtient ainsi des céréales cuites possédant un goût de fond caractéristique, qui rappelle le goût du grain cuit et/ou un goût toasté et/ou un goût biscuité.

Il est également connu, par exemple par la demande de brevet FR 2640472, un procédé de préparation de céréales cuites pour petit déjeuner consistant à préparer un mélange d'une mouture de céréales présentant un taux d'humidité de 14-22% en poids, puis à extruder ledit mélange. Le produit extrudé ainsi obtenu peut alors être séché, puis broyé et aggloméré de manière à obtenir des granulés susceptibles d'être aisément dissous dans un liquide.

Un autre procédé de préparation de céréales pour petit déjeuner consiste à préparer un mélange d'une mouture de céréales et de sucres, à introduire ce mélange dans une extrudeuse bi-vis avec la quantité d'eau adéquate de manière à obtenir des morceaux de céréales expansées de densité voulue, lesdits morceaux de céréales pouvant ensuite être enrobés d'un sirop puis séchés.

Les céréales ainsi obtenues ne présentent toutefois pas un goût de fond comparable à celui obtenu traditionnellement, ceci étant dû au fait que lors de l'extrusion, le temps de cuisson est de faible importance, généralement de l'ordre de la minute, alors que pour les procédés plus classiques, par exemple de cuisson à la vapeur, le temps de traitement thermique peut varier de 15 minutes à une heure, voire plus.

BE783756 décrit un procédé de préparation de céréales pour petit déjeuner à base de farine de soya, dans lequel on hydrolyse au préalable la farine de soya pour éliminer le goût de soya, on la mélange éventuellement avec une céréale gélatinisée au préalable, on l'extrude et on l'expanse.

US2954296 décrit un procédé de fabrication d'amuses-gueules expansés par explosion-expansion, dans lequel la forme des objets à expanser est conservée grâce au fait que l'on utilise au départ un mélange d'une plus grande partie de farine crue avec une moins grande partie de farine gélatinisée.

EP0016649 décrit un procédé de fabrication de riz reconstitué expansé instantané, dans lequel on part d'un mélange de farine crue et de farine gélatinisée.

GB847677 décrit un procédé de fabrication d'amuse-gueules prêts à être frits juste avant consommation, dans lequel on forme une pâte d'amidon, eau et lait, on la gélatinise, on la mélange avec une farine non gélatinisée, on gélatinise le mélange, on le sèche et on le découpe.

US3890454 décrit un procédé de préparation d'une farine adéquate pour la cuisson-extrusion, dans lequel on mélange de la farine crue et de la farine prégélatinisée.

US3554763 décrit un procédé de fabrication de céréales à l'arôme de miel dans lequel on réalise une cuisson partielle d'un mélange de miel liquide, bicarbonate de sodium et farine de blé, de manière à gélatiniser partiellement L'amidon de la farine, on comprime le mélange, on l'expansé et on le sèche.

Whistler et al., STARCH, Chemistry and Technology, Academic Press, 1984, page 583, décrivent comment l'amidon gélatinise au cours de sa cuisson dans l'eau.

La présente invention a pour but de pallier les inconvénients de l'art antérieur, et de proposer un procédé permettant la préparation de céréales cuites présentant un goût de fond correct tout en étant obtenues par extrusion.

La présente invention a ainsi pour objet un procédé de préparation de céréales cuites dans lequel on prépare un premier mélange présentant une teneur en matière sèche de 20 à 85% et comprenant de l'eau et une matière première choisie dans le groupe constitué des matières amylacées et le soya, on traite thermiquement le premier mélange à 50-160°C pendant 10-180 min, on introduit ce premier mélange dans une extrudeuse en même temps qu'un second mélange comprenant au moins une matière première également choisie dans le groupe constitué des matières amylacées et le soya, et l'on extrude le mélange total ainsi obtenu à 125-135°C pendant 20-60 s. 50-65% du mélange total étant traité thermiquement.

Dans la suite de la description, on emploiera le terme "matière première" dans le sens "matière première choisie dans le groupe constitué des matières amylacées et du soja".

La présente invention consiste donc à extruder un mélange comprenant, d'une part, une partie de la matière première préalablement traitée thermiquement et d'autre part, le reste de ladite matière première, ajoutée à la première partie, juste avant extrusion.

Le procédé selon la présente invention permet donc la préparation de produits présentant un goût de fond correct, tout en limitant au minimum le temps de résidence à l'intérieur de l'extrudeuse et la température employée, donc en conservant leurs qualités aux matières premières (teneur en vitamines par exemple).

De plus, la présente invention permet la préparation de produits qui ont, d'une part, un goût de fond proche de celui de céréales obtenues traditionnellement par cuisson à la vapeur, d'autre part, une forme expansée de façon plus simple, grâce à l'étape d'extrusion.

Enfin, la préparation de ces produits est effectuée grâce à un système industriel beaucoup plus flexible, et moins onéreux, que les systèmes de l'art antérieur.

Dans la suite de la présente description, les pourcentages et parties sont donnés en poids.

Ainsi, selon la présente invention, on traite thermiquement un premier mélange constitué d'une matière première selon l'invention et d'eau.

On peut choisir comme matière première selon l'invention, une farine ou semoule de blé dur, de blé tendre, de riz ou de maïs, voire une farine ou semoule de soja ou de pommes de terre, seule ou en mélange.

On ajoute de l'eau à ladite matière première de manière à obtenir un mélange transportable industriellement, ayant un taux de matière sèche de 20-85%.

On peut ajouter des sucres tels que du saccharose ou du glucose audit premier mélange, ainsi que des arômes ou additifs tels qu'agents conservateurs, ou modificateurs du pH.

On peut également ajouter audit premier mélange des enzymes, telles que des amylases, de manière à en modifier la viscosité, ce qui peut permettre d'ajouter moins d'eau.

L'ajout d'enzymes peut également permettre la modification de certaines caractéristiques, entre autres organoleptiques, du produit final, telles que le goût, la texture ou l'aspect.

On traite alors thermiquement le premier mélange ainsi obtenu à 50-160°C, pendant 10 à 180 minutes, par exemple dans une cuve à double manteau dans lequel on injecte de la vapeur.

Il est clair que le temps de traitement thermique dépend de la température dudit traitement, un temps plus court impliquant, pour obtenir un goût équivalent, une température plus élevée, éventuellement au détriment de certains nutriments.

II est de la compétence de l'homme du métier de choisir un temps et une température corrects pour obtenir le produit final tel que souhaité dans lequel les arômes auront eu le temps de se développer.

On traite thermiquement 50-65% du mélange total, tout en gardant à l'esprit le fait que plus la proportion de premier mélange sera importante, plus le "gain" en goût sera élevé.

Il est possible de partiellement sécher le premier mélange ainsi obtenu, par exemple sur un sécheur à rouleaux.

On obtient ainsi un premier mélange traité thermiquement, présentant un goût de cuit marqué et étant transportable par des moyens classiques tels que vis d'Archimède ou pompes.

On introduit alors le premier mélange traité thermiquement dans une extrudeuse, en même temps que l'on y introduit le second mélange comprenant le reste de la matière première selon l'invention.

On peut ajouter dans ce second mélange des additifs tels que des conservateurs, des vitamines, des arômes. Il est également possible d'ajouter le reste des sucres nécessaires, dans le second mélange.

Le second mélange se présente de préférence sous forme pulvérulente, afin d'obtenir un mélange total introduit dans l'extrudeuse présentant une humidité compatible avec une étape d'extrusion, c'est-à-dire un taux de matière sèche de l'ordre de 65-88%.

En effet, un taux de matière sèche trop faible rend l'extrusion difficile (pas de rétention dans l'extrudeuse et/ou pas d'expansion finale) et implique l'obligation d'éliminer l'excès d'eau, avant ou pendant ladite étape d'extrusion, alors qu'un taux de matière sèche trop important bloque l'extrudeuse.

Dans une forme particulière de l'invention, on peut introduire dans l'extrudeuse un mélange homogène préalablement préparé, constitué des premier et second mélange. Pour ce faire, on peut utiliser une vis de gavage qui va prendre et mélanger les premier et second mélange avant de les introduire dans l'extrudeuse.

Dans une autre forme d'exécution, on peut introduire les premier et second mélanges à des endroits différents de l'extrudeuse, par exemple le premier mélange dans la section d'alimentation de l'extrudeuse et le second mélange dans la section suivante en aval.

L'extrusion peut être effectuée dans une extrudeuse mono- ou bi-vis, dans des conditions usuelles, à 125-135°C pendant 20-60 secondes.

II est possible d'enrober et/ou de sécher le mélange final obtenu après extrusion.

On obtient ainsi un produit possédant le goût de fond recherché, qui peut s'expanser librement et directement à la sortie de l'extrudeuse, ou qui peut être formé de la manière souhaitée, par exemple floconné.

### Exemple comparatif (i)

On prépare un premier mélange comprenant 25 kg de farine de blé, 15 kg de saccharose et de l'eau, présentant un taux de matière sèche de 75%, que l'on homogénéise dans un moulin et dont on porte la température à 80°C.

On laisse le premier mélange ainsi préparé au repos dans une cuve tout en maintenant sa température à 75-80°C pendant environ 2 heures, de manière à développer le goût de fond recherché.

On prépare également un second mélange comprenant 40 kg de farine de maïs, 10 kg de saccharose, 6 kg de glucose, 2 kg de miel et présentant un taux de matière sèche de 89-90,2%.

Le premier mélange traité est introduit dans une extrudeuse bi-vis, en même temps que le reste des ingrédients constituant le second mélange, de manière à obtenir une charge totale de 100 kg de matières hors ajout d'eau.

L'ensemble est extrudé à 125-135°C pendant environ 30 secondes, puis formé et séché selon les techniques classiques, à 60°C pendant 30 minutes, puis 160°C pendant 1½ minute.

On obtient ainsi un produit du type céréales pour petit déjeuner présentant un goût agréable.

Pour comparaison, on prépare un produit ayant la même composition par un procédé consistant à préparer un mélange présentant un taux de matière sèche de 87% et comprenant 40 kg de farine de maïs, 25 kg de saccharose, 25 kg de farine de blé, 6 kg de glucose et 2 kg de miel, puis à le traiter à la vapeur à 90°C pendant 1 à 2 minutes et à l'extruder à 125-135°C pendant 30 secondes, avant de le former et de le sécher comme précédemment.

On obtient ainsi un produit témoin, susceptible d'être utilisé comme céréales pour le petit déjeuner.

On "reconstitue" les produits ainsi préparés par addition de 120 ml de lait à 30 grammes de céréales, et on propose le produits obtenus à un groupe de 8 dégustateurs avertis.

On obtient les résultats de dégustation suivants:

| Caractéristiques de goût goût de biscuit | Témoin faible | Invention moyen |
|---|---|---|
| goût de grain cru | 4,6 | 3,6 |
| goût de grain cuit | 3,0 | 3,4 |
| goût toasté | 4,8 | 5,6 |
| goût de caramel | 4,0 | 4,4 |
| goût de sucre brun | 1,8 | 2,6 |

Plus la note est élevée, plus le goût considéré est fort, étant donné que lesdites notes peuvent aller de 1 pour un goût inexistant à 9 pour un goût très prononcé.

Le produit selon l'invention possède donc un profil de goût plus proche des goûts recherchés de grain cuit, toasté, biscuit, que le produit obtenu par le procédé en une seule étape.

### Exemple comparatif (ii)

On prépare, de manière similaire à celle décrite dans l'exemple 1, un premier mélange comprenant 25 kg de farine de blé, 15 kg de saccharose et de l'eau, présentant un taux de matière sèche de 75%, que l'on homogénéise dans un moulin et dont on porte la température à une température donnée telle que définie dans le tableau suivant.

On laisse le premier mélange ainsi préparé au repos dans une cuve tout en maintenant sa température à cette température pendant un temps tel que défini dans le tableau suivant. On prépare également un second mélange comprenant 40 kg de farine de mais, 10 kg de saccharose, 6 kg de glucose, 2 kg de miel et présentant un taux de matière sèche de 89-90,2%.

Le premier mélange traité est introduit dans une extrudeuse bi-vis, en même temps que le reste des ingrédients constituant le second mélange, et l'ensemble est extrudé à 125-135°C, pendant environ 30 secondes, puis formé et séché de manière similaire à l'exemple 1.

On obtient ainsi une céréale pour petit déjeuner que l'on "reconstitue" par addition de 120 ml de lait à 30 grammes de céréales, puis l'on propose le produit obtenu à un groupe de 8 dégustateurs avertis.

On obtient les résultats suivants:

| Température de traitement | Temps de traitement | Observations |
|---|---|---|
| 40-50°C | 40 min | pas de goût développé ou très faible |
| 75-80°C | 10 min | pas de goût développé |
| 75-80°C | 3 h | produit trop foncé et trop amer |
| 75-80°C | 2 h | goût développé correct |

On constate donc que la température et le temps sont deux paramètres liés, sur lesquels il est possible de jouer pour obtenir un produit tel que souhaité.

### Exemple comparatif (iii)

On prépare, de manière similaire à celle décrite dans l'exemple 1, un premier mélange comprenant 25 kg de farine de blé, 10 kg de saccharose et de l'eau, présentant un taux de matière sèche de 75%, que l'on homogénéise dans un moulin et dont on porte la température à 80°C.

On laisse le premier mélange ainsi préparé au repos dans une cuve tout en maintenant sa température à 75-80°C pendant 2 heures.

On prépare également un second mélange comprenant 40 kg de farine de maïs, 10 kg de saccharose, 6 kg de glucose, 2 kg de miel et présentant un taux de matière sèche de 89-90,2%.

Le premier mélange traité, en une quantité telle que déterminée dans le tableau suivant, est introduit dans une extrudeuse bi-vis, en même temps que le reste des ingrédients constituant le second mélange, dans les quantités telles que mentionnées dans le tableau, puis l'ensemble est extrudé à 125-135°C, pendant environ 30 secondes puis formé et séché de manière similaire à l'exemple 1.

On obtient ainsi une céréale pour petit déjeuner que l'on "reconstitue" par addition de 120 ml de lait à 30 grammes de céréales, puis l'on propose le produit obtenu à un groupe de 8 dégustateurs avertis.

On obtient les résultats suivants:

| premier/second mélange (en taux de matière sèche) | observations |
|---|---|
| 20/80 | pas de goût supplémentaire apporté |
| 80/20 | quantité d'eau trop importante, rendent l'extrusion impossible. |

### Exemple comparatif (iv)

On prépare un premier mélange comprenant 20 kg de farine de maïs, 10 kg de saccharose, 2 kg d'extrait de malt, 1 kg d'huile de maïs et de l'eau, présentant un taux de matière sèche de 57%, que l'on homogénéise dans un moulin et dont on porte la température à 75°C.

On laisse le premier mélange ainsi préparé au repos dans une cuve tout en maintenant sa température à 75-80°C pendant environ 3 heures, de manière à développer le goût de fond recherché.

On prépare également un second mélange comprenant 65 kg de farine de maïs, 1 kg de chlorure de sodium, 0,5 kg de carbonate de calcium et présentant un taux de matière sèche de 87-88%.

Le premier mélange traité est introduit dans une extrudeuse bi-vis, en même temps que le reste des ingrédients constituant le second mélange, de manière à obtenir une charge totale de 100 kg de matières hors ajout d'eau.

L'ensemble est extrudé à 125-135°C pendant environ 1 minute, puis floconné et séché selon les techniques classiques. On obtient ainsi un produit du type cornflakes présentant un goût agréable.

Pour comparaison, on prépare un produit ayant la même composition par un procédé consistant à préparer, en une fois, un mélange présentant un taux de matière sèche de 87% et comprenant 85 kg de farine de maïs, 10 kg de saccharose, 2 kg d'extrait de malt, 1 kg d'huile de maïs, 1 kg de chlorure de sodium et 0,5 kg de carbonate de calcium, puis à l'extruder à 125-135°C pendant 1 minute, avant de le floconner et de le sécher comme précédemment.

On obtient ainsi un produit témoin.

On "reconstitue" les produits ainsi préparés par addition de 120 ml de lait à 30 grammes de céréales, et on propose ces produits à un groupe de 8 dégustateurs avertis.

On obtient les résultats de dégustation suivants:

| Caractéristiques de goût | Témoin | Invention |
|---|---|---|
| goût de grain cru | 5,2 | 3,1 |
| goût de grain cuit | 2,8 | 3,3 |
| goût toasté | 4,8 | 5,4 |
| goût de sucre brun | 1,2 | 1,9 |

Le système de notation est le même que celui de l'exemple 1.

Ainsi, l'on constate que le procédé de l'invention permet l'obtention d'un produit présentant un goût de grain cuit, de sucre brun et un goût toasté plus intense que celui obtenu par le procédé en une seule étape.

## Revendications

1. Procédé de préparation de céréales cuites, dans lequel on prépare un premier mélange présentant une teneur en matière sèche de 20 à 85% et comprenant de l'eau et une matière première choisie dans le groupe constitué des matières amylacées et le soya, on traite thermiquement le premier mélange à 50-160°C pendant 10-180 min, on introduit ce premier mélange dans une extrudeuse en même temps qu'un second mélange comprenant au moins une matière première également choisie dans le groupe constitué des matières amylacées et le soya, et l'on extrude le mélange total ainsi obtenu à 125-135°C pendant 20-60 s, 50-65% du mélange total étant traité thermiquement.

## Patentansprüche

1. Verfahren zur Herstellung von gekochten Getreideprodukten, bei dem man eine erste Mischung herstellt, die einenTrockenmassegehalt von 20 bis 85 % aufweist und Wasser und einen Rohstoff enthält, der aus der Gruppe ausgewählt ist, die aus stärkehaltigen Materialien und Soya besteht, daß man diese erste Mischung bei 50 bis 160°C für 10 bis 180 min thermisch behandelt, daß man diese erste Mischung gleichzeitig mit einer zweiten Mischung in einen Extruder einführt, die wenigstens einen Rohstoff umfaßt, der in gleicher Weise aus der Gruppe ausgewählt ist, die aus stärkehaltigen Materialien und Soja besteht, und daß man die auf diese Weise erhaltene Gesamtmischung bei 125 bis 135°C innerhalb von 20 bis 60 s extrudiert, wobei 50-65% der Gesamtmischung thermisch behandelt wird.

## Claims

1. Process for preparing cooked cereals, wherein a first mixture is prepared having a dry matter content of 20 to 85% and comprising water and a raw material selected from the group consisting of starchy materials and soya, the first mixture is treated thermally at 50-160°C for 10-180 min, this first mixture is introduced into an extruder at the same time as a second mixture comprising at least one raw material also selected from the group consisting of starchy materials and soya, and the total mixture thus obtained is extruded at 125-135°C for 20-60 s, 50-65% of the total mixture being treated thermally.
